# EUROPÄISCHE PATENTANMELDUNG

(11) **EP 3 409 523 A1**
(43) Veröffentlichungstag der Anmeldung: **05.12.2018**
(21) Anmeldenummer: 17177846.7
(22) Anmeldetag: 26.06.2017
(51) Int. Cl.: B60K 1/02, B60K 1/00, B60K 1/04, B60K 7/00

(54) **ELEKTROFAHRZEUG**

(30) Priorität: 30.05.2017 DE 102017111801
(71) Anmelder: FLET GmbH, 38118 Braunschweig (DE)
(72) Erfinder: Meyer, Wolfgang, 38116 Braunschweig (DE); Grote, Jochen, 38104 Braunschweig (DE)
(74) Vertreter: Gramm, Lins & Partner Patent- und Rechtsanwälte PartGmbB

(57) **Zusammenfassung**

Die Erfindung betrifft ein Elektrofahrzeug (10), insbesondere Elektroauto, mit (a) einer ersten Achse (12), (b) einer zweiten Achse (14), (c) einem Elektromotor (18) zum Antreiben von zumindest einer der Achsen, der eine Elektromotor-Bauhöhe (h_{M}) hat, und (d) einer Batterie (22) zum Versorgen des Elektromotors (18) mit elektrischer Energie, die eine Batterie-Bauhöhe (h_{B}) hat. Erfindungsgemäß ist vorgesehen, dass die Elektromotor-Bauhöhe (h_{M}) der Batterie-Bauhöhe (h_{B}) weitgehend entspricht.

## Beschreibung

Die Erfindung betrifft ein Elektrofahrzeug, insbesondere ein Elektroauto, mit (a) einer ersten Achse, (b) einer zweiten Achse, (c) einem Elektromotor zum Antreiben von zumindest einer der Achsen, der eine Elektromotor-Bauhöhe hat, und (d) einer Batterie zum Versorgen des Elektromotors mit elektrischen Energien, die eine Batterie-Bauhöhe hat.

Elektrofahrzeuge werden seit geraumer Zeit hergestellt und erleben eine Renaissance. Im Vergleich zu Fahrzeugen mit Verbrennungsmotor ist ihr Anteil bisher jedoch gering. Auch wenn die Herstellung von Elektrofahrzeugen sich grundsätzlich einfacher und kostengünstiger gestaltet, als die Herstellung von Verbrennungsmotorfahrzeugen, so werden bisher für die unterschiedlichen Leistungsklassen in den Außenabmessungen unterschiedlich große Elektromotoren eingesetzt.

Der Erfindung liegt die Aufgabe zugrunde, ein verbessertes Elektrofahrzeug vorzuschlagen.

Die Erfindung löst das Problem durch ein gattungsgemäßes Elektrofahrzeug, bei dem die Elektromotor-Bauhöhe der Batterie-Bauhöhe weitgehend entspricht.

Vorteilhaft an diesem Elektrofahrzeug ist, dass der Elektromotor und die Batterie auf gleicher Höhe angeordnet werden können, was eine bevorzugte Ausführungsform darstellt und dazu führt, dass die Bauhöhe, die für den Elektromotor und die Batterie vorgesehen werden muss, klein gewählt werden kann. Besonders günstig ist es, wenn, was ebenfalls eine bevorzugte Ausführungsform darstellt, sowohl die Batterien als auch der Elektromotor unterhalb eines Niveaus angeordnet ist, auf dem der Fahrersitz sich befindet. In anderen Worten sind Motor und Batterie dann vollständig unter dem Fahrersitz angeordnet. Das führt dazu, dass der Schwerpunkt des Elektrofahrzeugs so tief liegt, dass sich eine gute Straßenlage ergibt.

Besonders vorteilhaft ist, dass diese Anpassung der Bauhöhen eine Modularisierung von Batterien und Elektromotor ermöglicht. Das wiederum gestattet es, die Herstellung von verschiedenen Modellen mit unterschiedlichen Antriebsleistungen rationell zu planen und zu fertigen.

Im Rahmen der vorliegenden Beschreibung wird unter einem Elektrofahrzeug insbesondere ein Landfahrzeug verstanden, beispielsweise ein Elektroauto oder ein Elektro-Lastkraftwagen. Vorzugsweise hat das Elektrofahrzeug vier Räder.

Unter der Achse wird das Bauteil verstanden, an dem die Räder befestigt sind. Die mathematische Achse, um die die Räder rotieren, wird als Drehachse bezeichnet.

Die Elektromotor-Bauhöhe wird insbesondere berechnet anhand desjenigen gedachten Quaders minimalen Volumens, der 90% der Masse des Elektromotors enthält. In anderen Worten ist es möglich, dass kleinere Bereiche des Elektromotors auskragen oder Vorsprünge ausbilden, wenngleich dies oft nicht vorteilhaft ist.

Die Batterie-Bauhöhe wird auf die gleiche Weise berechnet.

Günstig ist es, wenn der Elektromotor die Räder einer Achse über ein Differential antreibt. Alternativ ist es aber auch möglich, dass mehr als ein Elektromotor vorhanden ist, wobei zumindest einer der Elektromotoren lediglich ein Rad antreibt. Die etwaigen Drehgeschwindigkeitsunterschiede bei der Kurvenfahrt werden in diesem Fall elektronisch ausgeregelt.

Vorzugsweise ist ein Elektrofahrzeug ein Fahrzeug, dessen Antriebsdrehmoment bei konstant 50 Kilometer pro Stunde zu zumindest 50% vom Elektromotor stammt. Besonders günstig ist es, wenn es sich um ein reines Elektrofahrzeug handelt, das heißt, dass die Räder ausschließlich elektrisch angetrieben sind.

Günstig ist es, wenn der Elektromotor vollständig zwischen den Achsen angeordnet ist. Hierunter ist insbesondere zu verstehen, dass der Elektromotor in einem Bereich angeordnet ist, der sich zwischen zwei Ebenen befindet, wobei jede der Ebenen vertikal verläuft und durch die Drehachsen der Räder des Elektrofahrzeugs bei Geradeausfahrt geht. Besonders günstig ist es, wenn der Abstand des Elektromotors zur ersten Achse möglichst wenig, vorzugsweise höchstens um den Faktor zwei, von einem Abstand von der zweiten Achse abweicht. Ein derartiges Elektrofahrzeug hat ein besonders kleines Massenträgheitsmoment bezüglich der Drehung um die Hochachse. Das Elektrofahrzeug hat daher besonders vorteilhafte Fahreigenschaften.

Günstig ist es, wenn der Abstand zwischen dem bezüglich der Längsachse des Elektrofahrzeugs vordersten Ende des Elektromotors, insbesondere des vorderen Elektromotor-Moduls, und dem hintersten Ende des Elektromotors, vorzugsweise dem hintersten Elektromotor-Modul, höchsten 15 % des Achsabstands beträgt.

Vorzugsweise besitzt das Elektrofahrzeug einen Fahrzeugboden. Der Elektromotor und die Batterie können auf dem Fahrzeugboden angeordnet sein. Alternativ sind sie am Fahrzeugboden hängend montiert. Die hängende Montage hat den Vorteil, besonders leicht durchgeführt werden zu können. Die Montage auf dem Fahrzeugboden bietet Vorteil bei dem Schutz der Batterien gegen Einwirkungen von außen.

Gemäß einer bevorzugten Ausführungsform ist der Elektromotor aus mindestens zwei Elektromotor-Modulen aufgebaut, wobei die Elektromotor-Module bezüglich einer Motor-Drehachse hintereinander angeordnet sind und mehrere gekoppelte Rotorwellen oder eine gemeinsame Rotorwelle haben. Die Elektromotor-Module sind vorzugsweise baugleich ausgebildet und miteinander verbunden.

Vorzugsweise ist zwischen zwei Elektromotor-Modulen ein Wellenlager für die durchgehende Rotorwelle des Elektromotors angeordnet. Auf diese Weise werden Schwingungen des Rotors vermindert, wenn das Fahrzeug über unebenen Untergrund fährt.

Vorzugsweise ist der Elektromotor ein Außenläufer, wobei der Rotor einen, insbesondere T-förmigen, Außenabschnitt hat und wobei der Stator zumindest ein Spulenpaket aufweist, das zwischen dem Außenabschnitt und der Rotorwelle angeordnet ist. Der T-förmige Außenabschnitt kann auch als Rotorglocke bezeichnet werden. Auf diese Weise ergibt sich ein hohes Drehmoment bei gleichzeitig geringer Bauhöhe. In anderen Worten ragt das zumindest eine Spulenpaket zwischen den Außenabschnitt und dem verbleibenden Teil des Rotors. Es ist möglich, nicht aber notwendig, dass die Rotorglocke symmetrisch bezüglich einer Symmetrieebene, die senkrecht zur Motor-Drehachse verläuft, ist.

Gemäß einer bevorzugten Ausführungsform sind die Rotorglocke und die Rotorwelle formschlüssig miteinander verbunden. Beispielsweise hat die Rotorglocke eine Innenverzahnung und die Welle des Rotors eine Außenverzahnung, wobei die Rotorglocke mittels der Innenverzahnung und der Außenverzahnung drehfest mit der Welle verbunden ist. Das erleichtert die Montage.

Vorzugsweise umfasst der Außenabschnitt auf seiner radial einwärtigen Seite Permanentmagnete. Das zumindest eine Spulenpaket ist elektrisch, mechanisch und/oder thermisch mit einer Kappe des Stators kontaktiert. In anderen Worten ist das zumindest eine Spulenpaket so an der Kappe des Stators befestigt, dass die Abwärme des Spulenpakets aktiv oder passiv beim Betrieb des Elektrofahrzeugs abgeführt wird.

Günstig ist es, wenn der Rotor eine Hohlwelle aufweist. Auf diese Weise wird die schwingende Masse reduziert. Zudem ist es möglich, dass der Rotor von innen gekühlt wird, indem ein Kühlfluid, insbesondere Luft oder Kühlflüssigkeit, beispielsweise Wasser, durch die Hohlwelle geschickt wird.

Vorzugsweise liegt ein Batterie-Massenschwerpunkt der Batterie und/oder ein Elektromotor-Massenschwerpunkt des Elektromotors zwischen den Achsen, insbesondere in einem zentralen Drittel, vorzugsweise einem zentralen Fünftel (Quintil), zwischen den Achsen. Wenn das Fahrzeug so steht, dass beide Achsen sich entlang einer horizontalen Ebene erstrecken, verläuft eine erste Vertikalebene so, dass sich die erste Achse entlang der ersten Vertikalachse erstreckt. Eine zweite Vertikalachse verläuft so, dass sich die zweite Achse entlang der zweiten Vertikalachse erstreckt. Die beiden Vertikalachsen verlaufen parallel zueinander. Das zentrale Drittel ist derjenige Bereich zwischen zwei weiteren Vertikalachsen, deren Abstand von einem Drittel des Abstands von erster und zweiter Vertikalachse entspricht, deren Abstand von einem Mittelpunkt, der genau zwischen der ersten und der zweiten Vertikalachse liegt, gleich ist. Der entsprechende Massenschwerpunkt ist dann zwischen diesen beiden zusätzlichen Vertikalachsen angeordnet. Eine derartige Anordnung der Batterie bzw. des Elektromotors führt zu besonders günstigen Fahreigenschaften, da das Massenträgheitsmoment bezüglich einer Gier-, Nick- oder Rollbewegung des Elektrofahrzeugs besonders klein ist.

Vorzugsweise hat der Fahrgastraum einen mitteltunnelfreien Boden. Da die Batterie und der Elektromotor gleiche Bauhöhen haben, ist ein Mitteltunnel zum Aufnehmen eines vergrößerten Elektromotors entbehrlich. Der Erfindung liegt die Erkenntnis zugrunde, dass es vorteilhaft ist, das Drehmoment des Elektromotors dadurch zu erhöhen, dass er lang ausgebildet wird. Bisherige Fahrzeuge setzen auf Elektromotoren mit möglichst großem Rotor-Durchmesser und geringer Baulänge, um das Drehmoment zu erhöhen. Das aber führt zu einer nachteiligen Lage des Elektromotor-Massenschwerpunkts und/oder macht einen Mitteltunnel notwendig. Das erfindungsgemäße Elektrofahrzeug kommt ohne Mitteltunnel aus.

Unter dem Merkmal, dass der Fahrgastraum einen mitteltunnelfreien Boden hat, wird insbesondere verstanden, dass der Boden im technischen Sinne eben ist. In anderen Worten sind Erhebungen zwar möglich, die maximale Erhebung ist aber klein. Insbesondere ist die maximale Erhebung zwischen Fahrer- und Beifahrersitz höchstens 10 Zentimeter über einer gedachten Ausgleichsebene durch den Boden des Fahrgastraumes.

Vorzugsweise besitzt das Elektrofahrzeug eine Längsachse und die Motor-Drehachse erstreckt sich entlang der Längsachse. Hierunter ist insbesondere zu verstehen, dass es zwar möglich, nicht aber notwendig ist, dass sich die Motor-Drehachse parallel zur Längsachse erstreckt. Insbesondere ist ein Versatzwinkel zwischen der Motor-Drehachse und der Längsachse möglich, der vorzugsweise höchstens 20°, insbesondere höchstens 5°, beträgt.

Vorzugsweise umfasst die Batterie zumindest zwei Batterie-Einheiten, wobei die Motor-Drehachse zwischen den Batterie-Einheiten verläuft. Unter dem Merkmal, dass die Motor-Drehachse zwischen den Batterie-Einheiten verläuft, wird verstanden, dass eine Projektion der Motor-Drehachse auf eine Ebene, entlang der sich die erste Achse und die zweite Achse erstrecken, zwischen einem ersten Batterieeinheit-Massenschwerpunkt der ersten Batterie-Einheit und einem zweiten Batterieeinheit-Massenschwerpunkt der zweiten Batterie-Einheit verläuft. Besonders günstig ist es, wenn die Drehachse so verläuft, dass - bezogen auf eine jeweilige Projektion auf die Ebene, entlang der die beiden Achsen verlaufen - die erste Batterie-Einheit von der zweiten Batterie-Einheit getrennt ist. In anderen Worten verläuft kein galvanisches Element einer Batterie-Einheit von einer Seite der Projektion der Drehachse auf die andere. Es ist allerdings möglich, dass elektrische Verbinder, insbesondere Kabel, von einer Seite der Projektion der Drehachse auf die andere Seite verlaufen.

Vorzugsweise besitzt der Elektromotor einen Rotor mit Permanentmagneten. Es ist dabei möglich, dass der Elektromotor ein Innenläufermotor ist. Alternativ ist der Elektromotor ein Außenläufermotor.

Das Elektrofahrzeug besitzt vorzugsweise ein Differential und ein Getriebe, das im Drehmomentfluss zwischen dem Motor und dem Differential angeordnet ist. Es ist möglich, nicht aber notwendig, dass das Elektrofahrzeug ein zweites Differential und eines zweites Getriebe aufweist, das im Drehmomentfluss zwischen dem Motor und dem zweiten Differential angeordnet ist. Das erste Differential treibt vorzugsweise die Räder der Vorderachse an. Das zweite Differential treibt vorzugsweise die Räder der Hinterachse an. Mit zwei Differentialen kann ein Vierradantrieb realisiert werden. Das erste Differential und/oder das zweite Differential sind jeweils drehstarr mit dem entsprechenden Rotor des Elektromotors gekoppelt.

Der Elektromotor kann besonders einfach gefertigt werden, wenn er einen Rotor mit Permanentmagneten aufweist, wobei der Rotor in Längsrichtung verlaufende Nuten aufweist, in denen die Permanentmagneten angeordnet sind. Beispielsweise sind die Permanentmagneten in die Nuten eingeschoben.

Um besonders hohe Drehmomente zu erzielen und/oder einfach einen Vierradantrieb zu realisieren ist es günstig, wenn das Elektrofahrzeug einen zweiten Elektromotor, der aus zumindest zwei Zweitelektromotor-Modulen aufgebaut ist, umfasst, wobei die Zweitelektromotor-Module einen gemeinsamen zweiten Rotor aufweisen und wobei der erste Rotor und der zweite Rotor parallel zueinander verlaufen. Es ist dabei möglich, dass der erste Elektromotor die Räder der ersten Achse antreibt und der zweite Elektromotor die Räder der zweiten Achse antreibt. Alternativ ist es auch möglich, dass der erste Elektromotor und der zweite Elektromotor gemeinsam die Räder einer der Achsen, beispielsweise der Vorderachse und/oder der Hinterachse, antreiben.

Gemäß einer bevorzugten Ausführungsform umfasst der Elektromotor einen zweiten Elektromotor, der vorzugsweise aus zumindest zwei Elektromotor-Modulen aufgebaut ist, einen dritten Elektromotor, der vorzugsweise aus zumindest zwei Elektromotor-Modulen aufgebaut ist, und einen vierten Elektromotor, der vorzugsweise aus zumindest zwei Elektromotor-Modulen aufgebaut ist, wobei jeder der Elektromotoren jeweils ein Rad, insbesondere über ein Winkelgetriebe, antreibt. Es ist günstig, wenn alle Elektromotor-Module baugleich sind. Es ist dann günstig, wenn alle Motoren von einer Motorsteuerung so angesteuert sind, dass sie ein gleiches Drehmoment auf das jeweilige Rad aufbringen, wobei vorzugsweise ein Durchdrehen unterdrückt wird. Eine solche Anti-Schlupf-Regelung gehört zum Stand der Technik und wird daher nicht weiter erläutert.

Vorzugsweise weist der Stator einen Basiskörper und ein zweites Spulenpaket auf, wobei das Spulenpaket an einer Kappe des Stators befestig ist und wobei die Kappe reversibel am Basiskörper befestigt ist. So ist der Elektromotor leicht zu montieren.

Im Folgenden wird die Erfindung anhand der beigefügten Zeichnungen näher erläutert. Dabei zeigt
- Figur 1a: eine dreidimensionale Teil-Ansicht auf ein erfindungsgemäßes Elektrofahrzeug gemäß einer ersten Ausführungsform,
- Figur 1b: das Elektrofahrzeug gemäß Figur 1a in einer Schnittansicht von hinten,
- Figur 2: ein Elektrofahrzeug gemäß einer zweiten Ausführungsform,
- Figur 3: ein erfindungsgemäßes Elektrofahrzeug gemäß einer dritten Ausführungsform,
- Figur 4: ein erfindungsgemäßes Elektrofahrzeug gemäß einer vierten Ausführungsform,
- Figur 5: ein erfindungsgemäßes Elektrofahrzeug gemäß einer fünften Ausführungsform,
- Figur 6: ein erfindungsgemäßes Elektrofahrzeug gemäß einer sechsten Ausführungsform,
- Figur 7: mit den Teilfiguren 7a und 7b als isometrische Ansichten und Teilfigur 7c als Schnittdarstellung eines Elektromotors als Innenläufer für ein erfindungsgemäßes Elektrofahrzeug und
- Figur 8: mit den Teilfiguren 8a und 8b, als isometrische Ansichten und mit den Teilfiguren 8c und 8d als Schnittdarstellungen eines erfindungsgemäßen Elektromotors als Außenläufer für ein erfindungsgemäßes Elektrofahrzeug.

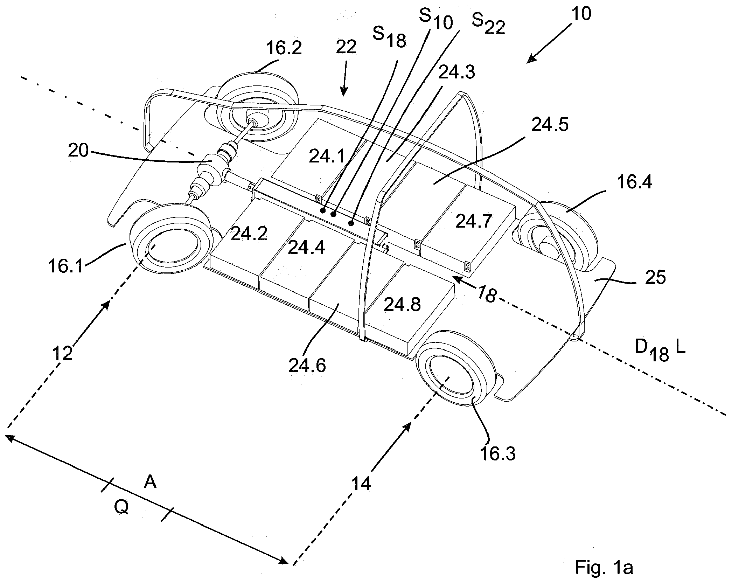

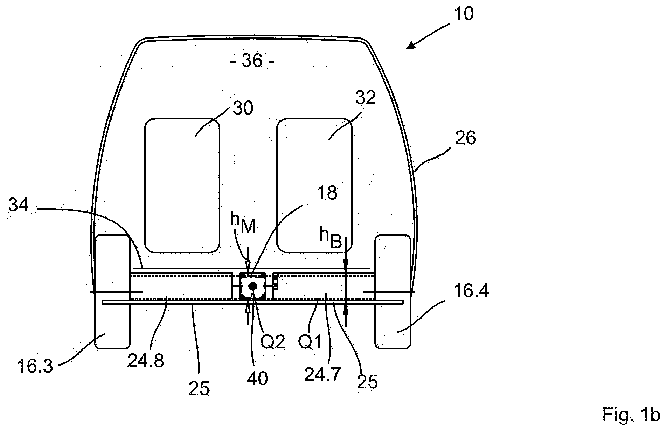

Figur 1 zeigt ein erfindungsgemäßes Elektrofahrzeug 10 in Form eines Elektroautos, das eine erste Achse 12 in Form einer Vorderachse und eine zweite Achse 14 in Form einer Hinterachse aufweist. An der ersten Achse 12 sind Räder 16.1, 16.2 befestigt, an der zweiten Achse 14 sind Räder 16.3, 16.4 befestigt. Ein Elektromotor 18 treibt über ein Differentialgetriebe 20, das auch Differential genannt werden kann, die Räder 16.1, 16.2 der ersten Achse 12 an.

Der Elektromotor 18 wird von einer Batterie 22 mit Strom versorgt. Die Batterie 22 umfasst zumindest zwei, im vorliegenden Fall acht, Batterie-Einheiten 24.1, 24.2, ..., 24.8.

Es ist zu erkennen, dass eine Motor-Drehachse D₁₈ zwischen den Batterie-Einheiten 24.1, 24.3, 24.5, 24.7 einerseits und 24.2, 24.4, 24.6 und 24.8 andererseits verläuft. Eine Masse mᵣ der rechtsseitig der Motor-Drehachse D₁₈ angeordneten Batterie-Einheiten 24.1, 24.3, 24.5 und 24.7 entspricht einer Masse mₗ der Batterie-Elemente links der Motor-Drehachse D₁₈, als im vorliegenden Fall der Batterie-Elemente 24.2, 24.4, 24.6 und 24.8.

Unter dem Merkmal, dass die beiden Massen mᵣ, mₗ einander entsprechen, wird insbesondere verstanden, dass die beiden Massen um höchstens 20%, vorzugsweise höchstens 15%, voneinander abweichen.

Das Elektrofahrzeug 10 besitzt einen Fahrzeugboden 25. In der vorliegenden Ausführungsform sind sowohl die Batterie 22 als auch der Elektromotor 18 auf dem Fahrzeugboden 25 montiert. Das Elektrofahrzeug 10 umfasst zudem nicht eingezeichnete Komponenten, wie beispielsweise eine Außenhülle, insbesondere aus Blech, sowie Sitze und eine Lenkung.

Figur 1b zeigt das Elektrofahrzeug 10 in einer Ansicht von hinten. Es ist zu erkennen, dass eine Elektromotor-Bauhöhe h_{M} einer Batterie-Bauhöhe h_{B} entspricht. Die Elektromotor-Bauhöhe h_{M} ist die Höhe desjenigen gedachten Quaders Q₁ minimalen Volumens, der 90% der Masse der Batterie 22 umschließt. Figur 1b zeigt zudem eine Karosserie 26 des Elektrofahrzeugs 10. Eingezeichnet ist zudem ein Fahrersitz 30 und ein Beifahrersitz 32, die beide auf einem ebenen Boden 34 eines Fahrgastraums 36 angeordnet sind.

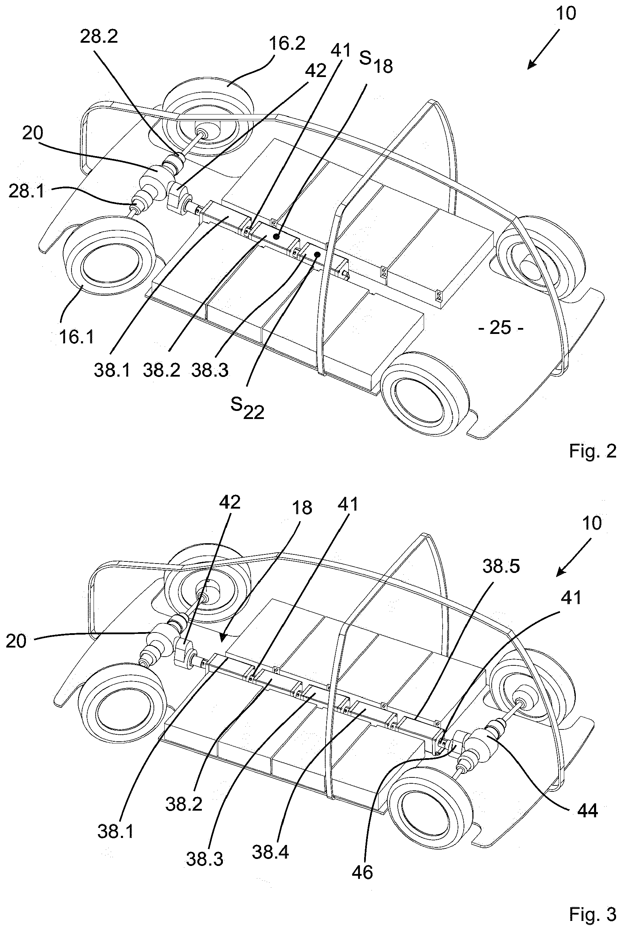

Figur 2 zeigt eine zweite Ausführungsform eines erfindungsgemäßen Elektrofahrzeugs 10, bei der der Elektromotor 18 aus drei hintereinander gekoppelten Elektromotor-Modulen 38.1, 38.2, 38.3 aufgebaut ist. Alle drei Elektromotor-Module 38.1, 38.2, 38.3 sind baugleich und weisen miteinander gekoppelte Rotorwellen 41 auf. Es ist möglich, nicht aber notwendig, dass wie in der vorliegenden Ausführungsform jedes Elektromotor-Modul 38.i (i = 1, ... N; N: Anzahl der Elektromotor-Module) ein eigenes Rotorelement aufweist, wobei die einzelnen Rotorelemente miteinander verbunden sind und somit den Rotor 39 bilden. Es ist auch möglich, dass der Rotor fügestellenfrei ausgebildet ist. Die Elektromotor-Module 38.i sind baugleich.

Figur 2 zeigt, dass das Elektrofahrzeug 10 ein zusätzliches Getriebe 42 zwischen dem Differentialgetriebe 20 und dem Elektromotor 18 aufweist. Auf diese Weise ist eine einfache Anpassung für die Rotordrehzahl an die Raddrehzahl möglich. Insbesondere kann der Elektromotor mit höheren Drehzahlen betrieben werden als ohne das Getriebe 42, bei dem es sich entsprechend vorzugsweise um ein Untersetzungsgetriebe handelt.

Figur 3 zeigt eine weitere Ausführungsform eines erfindungsgemäßen Elektrofahrzeugs 10, bei dem die gekoppelten Rotorwellen 41 des Elektromotors 18 sowohl mit dem Differential 20 als auch mit einem zweiten Differential 44 drehstarr verbunden SIND. Im vorliegenden Fall ist das Ende der gekoppelten Rotorwelle 41 über ein zweites Getriebe 46 mit dem zweiten Differential 44 verbunden.

Anders als in der Ausführungsform gemäß der Figur 2 besitzt der Elektromotor 18 fünf Elektro-Module 38.i (N = 5). Ein maximales Drehmoment Mₘₐₓ des Elektromotors gemäß Figur 2 beträgt Mₘₐₓ = 300 Nm. Hingegen beträgt das maximale Drehmoment Mₘₐₓ für das Elektrofahrzeug gemäß Figur 3 Mₘₐₓ = 500 Nm. Es ist zu erkennen, dass das maximale Drehmoment mit der Anzahl der Elektromotor-Module N linear ansteigt.

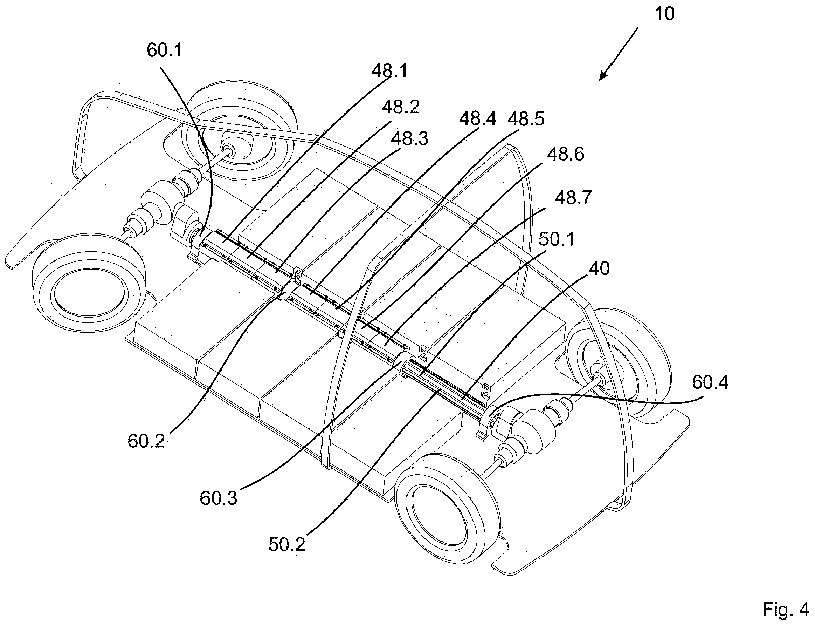

Figur 4 zeigt eine vierte Ausführungsform eines erfindungsgemäßen Elektrofahrzeugs 10. Der Elektromotor 18 weist mehrere Stator-Spulenpakete 48.1, ..., 48.N₄₈ (N₄₈: Zahl der Statorpakete) auf. Jedes Stator-Spulenpaket 48.j (j = 1, ..., N₄₈) lässt sich entfernen, ohne dass die durchgehende Rotorwelle 40 ausgebaut werden muss. Es ist zu erkennen, dass die durchgehende Rotorwelle 40 Nuten 50.1, 50.2 aufweist, in die der Übersichtlichkeit halber nicht eingezeichnete Permanentmagneten eingeschoben sind. Der Elektromotor gemäß Figur 4 ist ein Innenläufer.

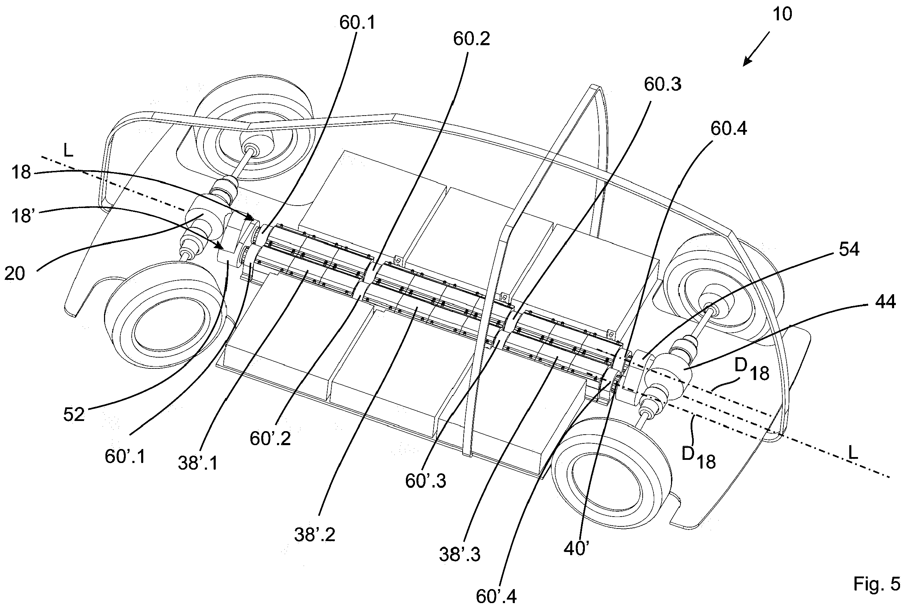

Figur 5 zeigt eine fünfte Ausführungsform eines erfindungsgemäßen Elektrofahrzeugs 10, das einen zweiten Elektromotor 18' aufweist. Der zweite Elektromotor umfasst drei Elektromotor-Module 38'.1, 38'.2 und 38.'3. Die beiden Elektromotor-Module 38'.1, und 38'.3 sind baugleich. Die durchgehende Rotorwelle 40' verläuft im technischen Sinne parallel zur durchgehenden Rotorwelle 40, das heißt, dass kleine Abweichungen von beispielsweise höchstens 5° tolerierbar sind. Beide durchgehenden Rotorwellen 40 und 40' und damit die zugeordneten Motor-Drehachsen D₁₈, D'₁₈ verlaufen zudem, wie bei den übrigen Ausführungsformen - entlang einer Längsachse L des Elektrofahrzeugs 10.

Die beiden Elektromotoren 18, 18' treiben gemeinsam ein erstes Koppelgetriebe 52 und ein zweites Koppelgetriebe 54 an. Das erste Koppelgetriebe 52 ist drehstarr mit dem ersten Differential 20 gekoppelt, das zweite Koppelgetriebe 54 ist mit dem zweiten Differential 44 drehstarr verbunden.

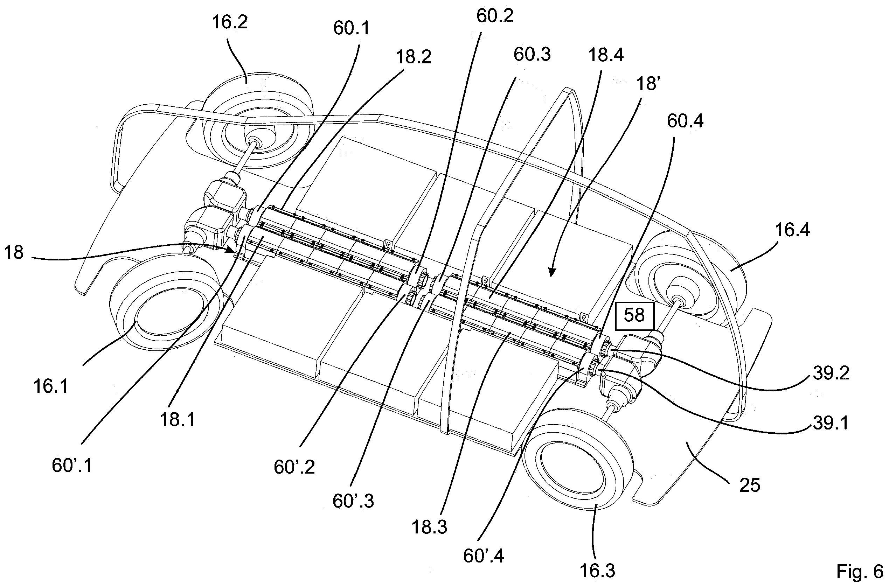

Figur 6 zeigt eine sechste Ausführungsform eines erfindungsgemäßen Elektrofahrzeugs 10, bei dem 4 Elektromotoren 18.1,18.2,18.3 und 18.4 verwendet werden,. Dabei treibt der erste Elektromotor 18.1 das erste Rad 16.1 und der zweite Elektromotor 18.2 das zweite Rad 16.2 an. Der dritte Elektromotor 18.3 treibt das dritte Rad 16.3 und der vierte Elektromotor 18.4 treibt das vierte Rad 16.4 an. Das Elektrofahrzeug 10 besitzt zudem eine schematisch eingezeichnete Motorsteuerung 58, die mit allen Elektromotoren und der Batterie verbunden ist. Die Motorsteuerung 58 ist ausgebildet zum Ansteuern aller Elektromotoren 18.1, ..., 18.4, sodass bei Kurvenfahrt des Elektrofahrzeugs 10 die unterschiedlichen Winkelgeschwindigkeiten der Räder zu angepassten Drehzahlen der jeweiligen Elektromotoren führen, sodass der Schlupf bei allen Rädern 16.i gleich groß ist und im Idealfall null beträgt. Es ist möglich, dass jeder Elektromotor aus zwei oder mehr baugleichen Elektromotor-Modulen aufgebaut ist.

Bei allen gezeigten Elektrofahrzeugen liegt ein Batteriemassenschwerpunkt S₂₂ (vgl. Fig. 1a) zwischen den Achsen 12, 14. Bei den gezeigten Ausführungsformen beträgt ein Abstand des Batterie-Massenschwerpunkts S₂₂ von einem Fahrzeug-Massenschwerpunkt S₁₀ höchstens ein Viertel eines Achsabstands A der beiden Achsen 12, 14. Ebenso liegt ein Elektromotor-Massenschwerpunkt S₁₈ dicht beim Fahrzeug-Massenschwerpunkt S₁₆, insbesondere in einem zentralen Quintil Q entlang der Längsachse L zwischen den Achsen 12, 14.

Figur 1b zeigt, dass sich die Batterie 22, insbesondere deren galvanische Zellen, nicht unterhalb des Elektromotors 18 befinden. In anderen Worten sind alle Batterie-Module 24.i bezüglich der Längsachse L entweder rechts oder links des Elektromotors 18 angeordnet, nicht aber oberhalb oder unterhalb desselben.

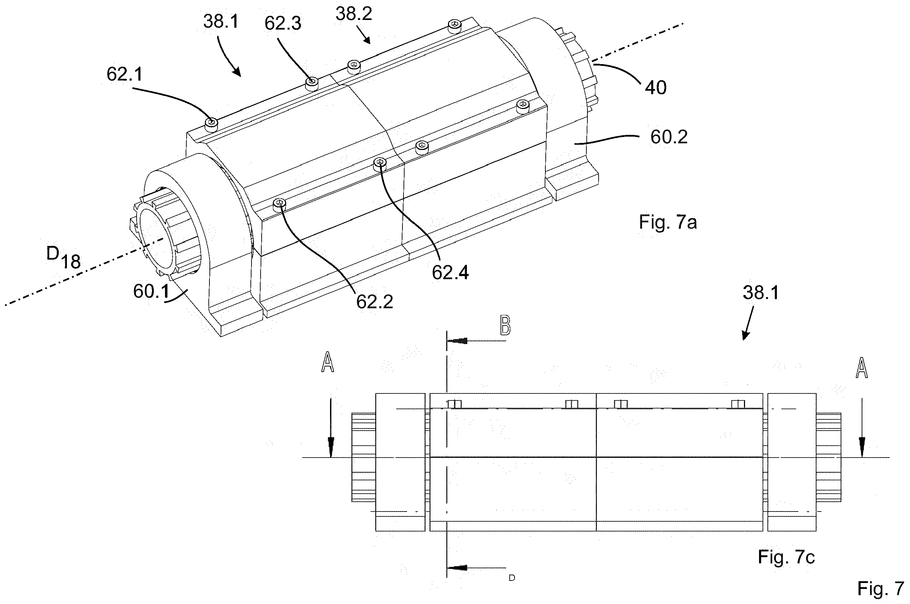

Figur 7a zeigt zwei hintereinander liegende Elektromotor-Module 38.1 und 38.2 in der Version eines Innenläufers und Wellenlager 60.1, 60.2, mit denen die durchgehende Rotorwelle 40 gelagert und am Fahrzeugboden 25 (vgl. Fig. 4, 5) befestigt ist. Es ist zu erkennen, dass die Elektromotor-Module 38.1, 38.2 mittels lösbarer Befestigungselemente, im vorliegenden Fall in Form von Schrauben 62.1, ... entfernt werden können.

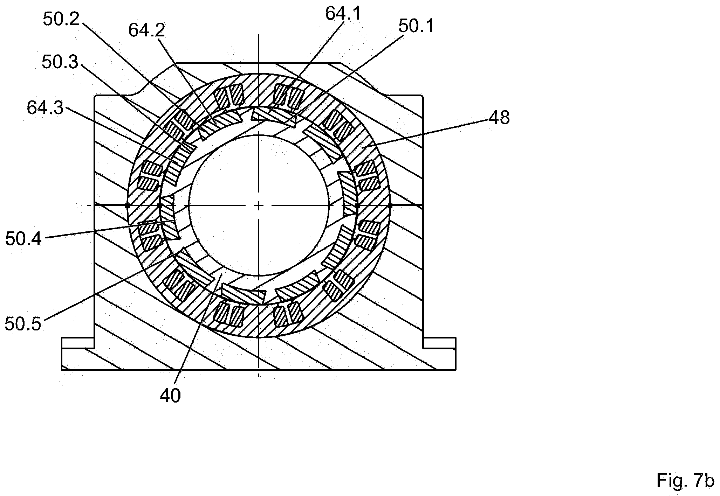

Figur 7b zeigt in einem Vertikalschnitt durch ein Elektromotor-Modul der Innenläuferversion, dass in die Nuten 50.1, 50.2 ....der durchgehenden Rotorwelle 40 Permanentmagnete 64.1 ... eingeschoben sind, die vom Spulenpaket 48 zur Rotation angeregt werden.

Figur 7c zeigt eine Seitenansicht der Elektromotor-Module 38.1 und 38.2der Innenläuferversion.

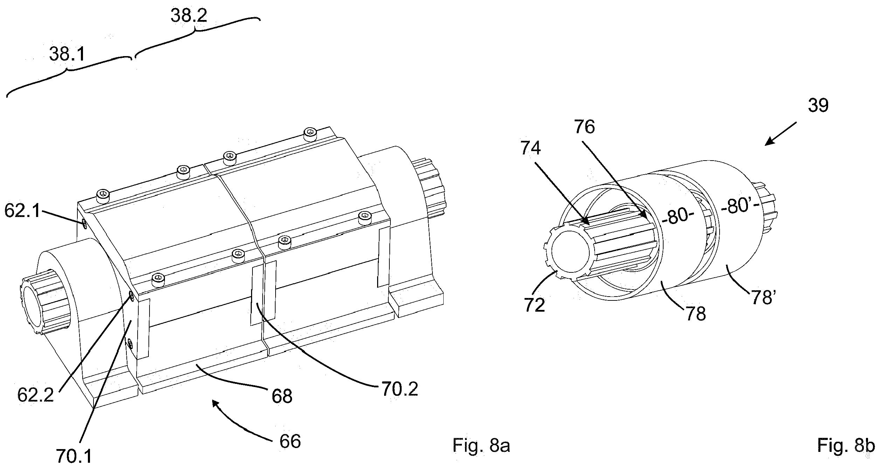

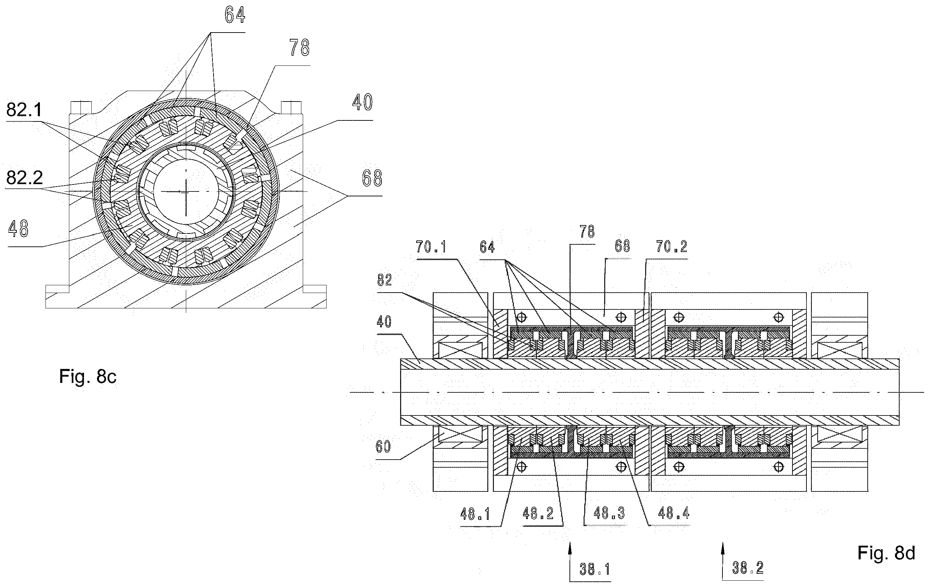

Figur 8 zeigt zwei hintereinander liegende Elektromotor-Module 38.1 und 38.2 der Außenläuferversion, deren Stator 66 einen Basiskörper 68 sowie eine erste Kappe 70.1 und eine zweite Kappe 70.2 aufweist. Die Kappen 70.1, 70.2 sind mit Schrauben 62.1, 62.2, ..., 62.8 am Basiskörper 68 reversibel befestigt. Jede Kappe 70.i ist mit mindestens einem Stator-Spulenpaket fest verbunden.

Figur 8b zeigt wie die übrigen Teilfiguren der Figur 8 eine maßstabgemäße Ansicht des Rotors 39, der eine Welle 72 in Form einer Hohlwelle umfasst. Die Welle 72 besitzt eine Außenverzahnung 74, auf der mit einer Innenverzahnung 76 eine Rotorglocke 78 sitzt. Die Rotorglocke 78 bildet einen T-förmigen Außenabschnitt des Rotors 39. Es ist zu erkennen, dass der Rotor 39 zudem eine zweite Rotorglocke 78' aufweist. Selbstverständlich können weitere Rotorglocken vorhanden sein. Beispielsweise umfasst der Elektromotor zumindest drei Rotorglocken. In Fig. 8b sind die Permanentmagnete des Rotors der Übersichtlichkeit halber nicht dargestellt.

Figur 8c zeigt einen Schnitt durch das Elektromotor-Modul 38.1 der Außenläuferversion. Es ist zu erkennen, dass die Permanentmagnete 64 auf einer Innenseite eines Mantelabschnitts 80 der Rotorglocke 78 angeordnet sind. Diese werden von dem Stator-Spulenpaket 48 bewegt. Beispielweise sind die Permanentmagnete 64.i in Nuten in der radial einwärtigen Seite des Mantelabschnitts 80 eingeschoben.

Figur 8d zeigt eine Schnittansicht durch die Elektromotor-Module 38.1 und 38.2 der Außenläuferversion mit den T-förmigen Rotorglocken 78 und 78'. Es ist zu erkennen, dass Spulen 82.i starr mechanisch und zudem thermisch mit der Kappe 70 des Stators 66 verbunden sind. In anderen Worten ist zumindest ein Spulenpaket 48, das die Spulen 82.i umfasst, so an der Kappe 70 des Stators 66 befestigt, dass Abwärme des Spulenpakets 48 aktiv oder passiv beim Betrieb des Elektrofahrzeugs abgeführt wird.

**Bezugszeichenliste**

| | | | |
|---|---|---|---|
| 10 | Elektrofahrzeug | 64 | Permanentmagnet |
| 12 | erste Achse | 66 | Stator |
| 14 | zweite Achse | 68 | Basiskörper |
| 16 | Räder | 70 | Kappe |
| 18 | Elektromotor | 72 | Welle |
| 20 | Differential | 74 | Außenverzahnung |
| 22 | Batterie | 76 | Innenverzahnung |
| 24 | Batterie-Modul | 78 | Rotorglocke |
| 25 | Fahrzeugboden | 80 | Mantelabschnitt |
| 26 | Karosserie | 82 | Spule |
| 28 | Gelenkwelle | | |
| | | A | Achsabstand |
| 30 | Fahrersitz | D₁₈ | Motor-Drehachse |
| 32 | Beifahrersitz | h_{M} | Elektromotor-Bauhöhe |
| 34 | Boden | h_{B} | Batterie-Bauhöhe |
| 36 | Fahrgastraum | i | Laufindex |
| 38 | Elektromotor-Modul | | |
| 39 | Rotor | j | Laufindex |
| 40 | Rotorwelle, durchgehend | L | Längsachse |
| 41 | Rotorwelle, gekoppelt | mₗ | Masse der Batterie-Elemente links der Motor-Drehachse |
| 42 | Getriebe | | |
| 44 | zweites Differential | mᵣ | Masse der Batterie-Elemente rechts der Motor-Drehachse |
| 46 | zweites Getriebe | | |
| 48 | Stator-Spulenpaket | Mₘₐₓ | maximales Drehmoment |
| 50 | Nut | N₃₈ | Anzahl der Elektromotor-Module |
| 52 | erstes Koppelgetriebe | N₄₈ | Zahl der Statorpakete |
| 54 | zweites Koppelgetriebe | Q | zentrales Perzentil |
| 56 | Elektromotor-Einheit | S₂₂ | Batterie-Massenschwerpunkt |
| 58 | Motorsteuerung | S₁₈ | Elektromotor-Massenschwerpunkt |
| 60 | Wellenlager | S₁₀ | Fahrzeug-Massenschwerpunkt |
| 62 | Schrauben | | |

## Patentansprüche

1. Elektrofahrzeug (10), insbesondere Elektroauto, mit
(a) einer ersten Achse (12),
(b) einer zweiten Achse (14),
(c) einem Elektromotor (18) zum Antreiben von zumindest einer der Achsen, der eine Elektromotor-Bauhöhe (h_{M}) hat, und
(d) einer Batterie (22) zum Versorgen des Elektromotors (18) mit elektrischer Energie, die eine Batterie-Bauhöhe (h_{B}) hat,
**dadurch gekennzeichnet, dass**
(e) die Elektromotor-Bauhöhe (h_{M}) der Batterie-Bauhöhe (h_{B}) weitgehend entspricht.

2. Elektrofahrzeug nach Anspruch 1, **dadurch gekennzeichnet, dass**
- der Elektromotor (18) aus zumindest zwei Elektromotor-Modulen (38.1, 38.2) aufgebaut ist und
- die Elektromotor-Module (38.1, 38.2) bezüglich einer Motor-Drehachse (D₁₈) hintereinander angeordnet sind und
- eine gemeinsame Rotorwelle (40) haben oder gekoppelte Rotorwellen (41) besitzen.

3. Elektrofahrzeug nach Anspruch 1, **dadurch gekennzeichnet, dass**
(a) der Elektromotor (18) ein Außenläufer ist,
(b) der Rotor ( 39) eine, insbesondere T-förmige, Rotorglocke (80) hat und
(c) der Stator (66) zumindest ein Spulenpaket (48), das zwischen der Rotorglocke (80) und der Rotorwelle (40) angeordnet ist, aufweist.

4. Elektrofahrzeug nach einem der vorstehenden Ansprüche, **dadurch gekennzeichnet, dass**
ein Batterie-Massenschwerpunkt (S₂₂) der Batterie (22) und/oder ein Elektromotor-Massenschwerpunkt (S₁₈) des Elektromotors (18) zwischen den Achsen (12, 14) liegt, insbesondere in einem zentralen Drittel (Q), vorzugsweise einem zentralen Fünftel, zwischen den Achsen.

5. Elektrofahrzeug nach einem der vorstehenden Ansprüche, **dadurch gekennzeichnet, dass**
- die Batterie (22) zumindest zwei Batterie-Einheiten aufweist und
- die Motor-Drehachse (D₁₈) zwischen den Batterie-Einheiten verläuft.

6. Elektrofahrzeug nach einem der vorstehenden Ansprüche, **gekennzeichnet durch**
(a) ein Differential (20) und
(b) ein Getriebe (42), das im Drehmomentfluss zwischen dem Motor und dem Differential (20) angeordnet ist, und gegebenenfalls
(c) ein zweites Differential und
(d) ein zweites Getriebe, das im Drehmomentfluss zwischen dem Motor und dem zweiten Differential angeordnet ist.

7. Elektrofahrzeug nach einem der vorstehenden Ansprüche, **dadurch gekennzeichnet, dass**
- der Elektromotor als Innenläufer eine Rotorwelle (40) mit Permanentmagneten (64) aufweist und dass
- die Rotorwelle (40) in Längsrichtung verlaufende Nuten (50) aufweist, in denen die Permanentmagnete (64) angeordnet sind.

8. Elektrofahrzeug nach einem der vorstehenden Ansprüche, **gekennzeichnet durch**
- einen zweiten Elektromotor (18.2), der aus zumindest zwei Zweitelektromotor-Modulen (38.2) aufgebaut ist,
- wobei die Zweitelektromotor-Module (38.2) einen gemeinsamen zweiten Rotor (39.1) aufweisen und
- wobei der erste Rotor (39.1) und der zweite Rotor (39.2) parallel zueinander verlaufen.

9. Elektrofahrzeug nach einem der vorstehenden Ansprüche, **gekennzeichnet durch**
(a) einen zweiten Elektromotor (18.2),
(b) einen dritten Elektromotor (18.3), und
(c) einen vierten Elektromotor (18.4),
(d) wobei jeder der Elektromotoren (18.1, 18.2, 18.3, 18.4) jeweils ein Rad (16.1, 16.2, 16.3, 16.4), insbesondere über ein Winkelgetriebe, antreibt.

10. Elektromotor für ein Elektrofahrzeug (10) nach einem der vorstehenden Ansprüche, **dadurch gekennzeichnet, dass**
(a) der Elektromotor (18) ein Außenläufer ist,
(b) der Stator (66) zumindest ein Spulenpaket (48) aufweist, und
(c) der Rotor (39) eine Rotorglocke (78) aufweist, die das Spulenpaket (48) radial hülsenförmig umgibt.

11. Elektromotor nach Anspruch 10, **dadurch gekennzeichnet, dass** die Rotorglocke (78) bezüglich eines Querschnitts in radialer Richtung T-förmig ist.

12. Elektromotor nach Anspruch 10 oder 11, **dadurch gekennzeichnet, dass**
(a) die Rotorglocke (78) eine Formschlusskontur wie z.B. eine Innenverzahnung hat,
(b) die Rotorwelle (40) eine Formschlusskontur wie z.B. eine Außenverzahnung hat, und
(c) die Rotorglocke (78) mittels dieser Formschlusskonturen drehfest mit der Rotorwelle (40) verbunden ist.

13. Elektromotor nach einem der Ansprüche 10 bis 12, **dadurch gekennzeichnet, dass**
(a) bei den Elektromotormodulen (38,38') der Außenläuferversion der Stator (66) über eine Kappe (70) mit dem Basiskörper (68) verbunden ist und mindestens zwei oder mehr Spulenpakete (48.1,48.2, ...) aufweist, und
(b) die Spulenpakete (48.1+48.2) an einer Kappe (70) des Stators (66) befestig sind,
(c) wobei die Kappe (70) reversibel am Basiskörper (68) befestigt ist.
